# EUROPEAN PATENT APPLICATION

(11) **EP 4 726 823 A1**
(43) Date of publication of application: **15.04.2026**
(21) Application number: 24849592.1
(22) Date of filing: 30.07.2024
(51) Int. Cl.: H01M 10/04

(54) **ELECTRODE ASSEMBLY AND SECONDARY BATTERY COMPRISING SAME**

(30) Priority: 03.08.2023 KR 20230101589; 25.07.2024 KR 20240098746
(71) Applicant: LG Energy Solution, Ltd., Seoul 07335 (KR)
(72) Inventor: LIM, Seung Hyun, Daejeon 34122 (KR); KIM, Jae Hong, Daejeon 34122 (KR); JO, Hyen Jun, Daejeon 34122 (KR)
(74) Representative: Plasseraud IP
(86) International application number: PCT/KR2024/011191
(87) International publication number: WO 2025/029025

(57) **Abstract**

The present invention relates to a method for manufacturing an electrode assembly, and more particularly, to a method for manufacturing an electrode assembly, which is capable of improving limitations of conventional stacking technologies to secure a degree of freedom in cell design (a degree of freedom in tab position design, etc.), solving the problem of folding of a separator, and preventing a problem of non-cutting of the separator due to a process tolerance.

## Description

### TECHNICAL FIELD

### CROSS-REFERENCE TO RELATED APPLICATION

The present application claims the benefit of the priority of Korean Patent Application Nos. 10-2023-0101589, filed on August 3, 2023, and 10-2024-0098746, filed on July 25, 2024, which are hereby incorporated by reference in their entirety.

### TECHNICAL FIELD

The present invention relates to a method for manufacturing an electrode assembly, and more particularly, to a method for manufacturing an electrode assembly, which is capable of improving limitations of conventional stacking technologies to secure a degree of freedom in cell design (a degree of freedom in tab position design, etc.), solving the problem of folding of a separator, and preventing a problem of non-cutting of the separator due to a process tolerance.

### BACKGROUND ART

In recent years, the price of energy sources increases due to the depletion of fossil fuels, the interest in environmental pollution is amplified, and the demand for eco-friendly alternative energy sources is becoming an indispensable factor for future life. Accordingly, studies on various power generation technologies such as solar power, wind power, and tidal power are continuing, and power storage devices such as batteries for more efficiently using the generated electrical energy are also of great interest.

Furthermore, as technology development and demand for electronic mobile devices and electric vehicles using batteries increase, the demands for batteries as energy sources are rapidly increasing. Thus, many studies on batteries which are capable of meeting various demands have been conducted.

Secondary battery are receiving much attention as energy sources in a variety of products such as mobile devices and electric vehicles. The secondary batteries are excellent energy resources capable of replacing the use of existing products that use fossil fuels and are receiving attention as eco-friendly energy sources because the secondary batteries do not produce by-products from the energy use.

A secondary battery includes an electrode assembly formed by alternately stacking electrodes and separators and a battery case that accommodates the electrode assembly. In addition, there have been various methods for manufacturing the electrode assembly in the related art. For example, stacking, folding type, stack and folding, jelly-roll, and lamination and stack manners are widely known in the industry. Among these, a Z-folding manner (or zigzag folding manner) obtained by sequentially and alternately arranging at least one negative electrode and at least one positive electrode on one surface or both surfaces of a rectangular separator and folding the resultant structure in a zigzag direction may be a representative manufacturing method in which efficiency of producing the electrode assembly is improved.

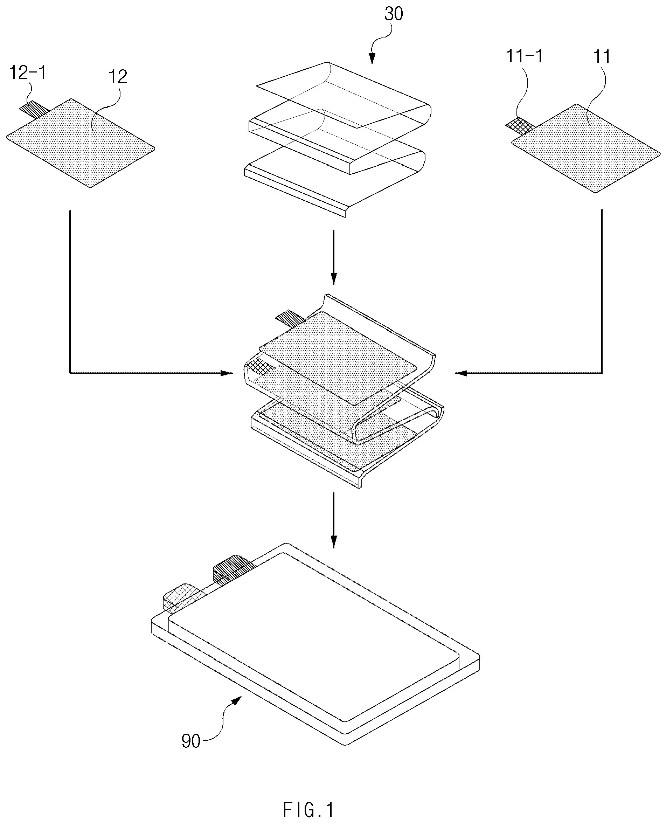

FIG. 1 is a conceptual perspective view illustrating a method for manufacturing an electrode assembly in a Z-folding manner according to the related art.

Referring to FIG. 1, in the Z-folding manner, a long rectangular separator 30 may be folded in a zigzag shape, and then, a positive electrode 12 and a negative electrode 11 may be interposed between the zigzag-shaped separators 30 to manufacture an electrode assembly 90. Particularly, the separator 30 may be folded once, the positive electrode 12 may be placed on the folded separator 30, the separator 30 may be folded again on the placed positive electrode 12, and the negative electrode 11 may be placed on the folded separator 30. These processes may be repeatedly performed to manufacture the electrode assembly 90. A positive electrode tab 12-1 and a negative electrode tab 11-1 may be attached to the positive electrode 12 and the negative electrode to protrude, respectively, and thus, even when the separator 30 is folded, the positive electrode tab 12-1 and the negative electrode tab 11-1 may not be completely covered by the separator 30, but be stacked so that at least a portion of each of the positive electrode tab 12-1 and the negative electrode tab 11-1 protrudes outside the separator 30. When the zigzag folding is completed in this manner, the finished electrode assembly 90 may be manufactured. FIG. 1 illustrates the finished electrode assembly 90 at the lowermost side. The electrode assembly 90 has a shape in which the positive electrode tab 12-1 and the negative electrode tab 11-1 are completely covered by the separator 30, and at least a portion of each of the positive electrode tab 12-1 and the negative electrode tab 11-1 protrudes outside the separator stack and thus is connected to an external terminal or an electrode lead.

However, the conventional Z-folding manner may be problematic when each of the electrodes 11 and 12 does not have a simple rectangular shape. For example, if the electrode includes a recessed part, which is a recessed portion, and the electrode tab is disposed in the recessed part, there is a problem if the conventional Z-folding manner is applied as it is. The reason is that when the separator 30 covers the electrode during the zigzag folding process, the recessed portion of the electrode and the electrode tab disposed in the recessed portion may be completely covered by the separator 30, and thus, there is a problem in that the electrode tab is not used later. In addition, if an attempt is made to simply cut the separator 30 of the recessed part to solve this problem, the electrode tab may be cut off or damaged during the cutting process of the separator 30, so the problem is still not solved.

### DISCLOSURE OF THE INVENTION

### TECHNICAL PROBLEM

The present invention has been made to solve the above problems, and an object of the present invention is to provide an electrode assembly, which is capable of improving limitations of stacking technologies to secure a degree of freedom in cell design (degree of freedom in tab position design, etc.), and a secondary battery including the same.

In addition, an object of the present invention is to provide an electrode assembly, which is capable of solving a problem of folding of a separator and preventing a problem of non-cutting of the separator due to a process tolerance, and a secondary battery including the same.

### TECHNICAL SOLUTION

An electrode assembly according to the present invention includes: a separator folded to be stacked; and an electrode interposed between the folded separators and provided with an electrode tab connection part to which an electrode tab is connected, wherein the electrode is provided with the electrode tab disposed at the electrode tab connection part, and the separator is cut in a shape corresponding to the electrode tab connection part at a position corresponding to the electrode tab connection part.

The electrode tab connection part may have a recessed shape and comprises a base side from which the electrode tab protrudes and a lateral side extending from the base side, and the separator may include: a first cutting line having a line shape that is spaced a predetermined distance (D) from the base side; a second cutting line having a line shape parallel to a direction, in which the lateral side extends, in a state of being spaced a predetermined distance (G) from the lateral side; and a third cutting line configured to connect the second cutting line to the first cutting line.

A protrusion length (L) by which the electrode tab protrudes from the base side may be less than a recessed depth (H) of the electrode tab connection part, which is measured based on the base side.

The predetermined distance (D) that is a distance by which the first cutting line is spaced apart from the base side may be less than the protrusion length (L) by which the electrode tab protrudes from the base side.

The third cutting line may have a curved shape.

The third cutting line may have a shape corresponding to a portion of a circle.

The third cutting line may have a shape that is further recessed than the first cutting line toward the base side.

Based on a cross-sectional view of the separator stack, which is taken along a stacking direction, at a position of the first cutting line, the separators may have a relatively more uniform electrode-separator overhang value (X1) along the stacking direction, and at a position of the second cutting line, the separators may have a relatively more non-uniform electrode-separator overhang value (X2) along the stacking direction, wherein each of the electrode-separator overhang values (X) may mean a distance value from an end of the electrode to an end of the separator.

Based on a cross-sectional view of the separator stack, which is taken along a stacking direction, at the position of the second cutting line, the separators may have an electrode-separator overhang value that gradually decreases and then gradually increases along the stacking direction.

Based on a cross-sectional view of the separator stack, which is taken along a stacking direction, at the position of the second cutting line, the stacked separators may be vertically symmetrical based on the separator stacked at a middle height in terms of the electrode-separator overhang value.

The separator may be zigzag-folded to be stacked.

A secondary battery according to the present invention includes: the above-described electrode assembly; and a battery case configured to accommodate the electrode assembly.

### ADVANTAGEOUS EFFECTS

The method for manufacturing the electrode assembly according to the present invention may improve the limitation of the stacking technologies of the conventional electrode separator to secure the degree of the freedom in cell design (degree of freedom in tab position).

In addition, an object of the present invention is to provide a method for manufacturing an electrode assembly, which is capable of solving a problem of folding of a separator and preventing a problem of non-cutting of the separator due to a process tolerance while stacking the electrode separator to manufacture the electrode assembly.

### BRIEF DESCRIPTION OF THE DRAWINGS

FIG. 1 is a conceptual perspective view illustrating a method for manufacturing an electrode assembly in a Z-folding manner according to the related art.
FIG. 2 is a flowchart schematically illustrating a method for manufacturing an electrode assembly according to an embodiment of the present invention.
FIG. 3 is a perspective view for explaining a pre-cutting part formation process in the method for manufacturing the electrode assembly according to an embodiment of the present invention.
FIG. 4 is a plan view illustrating an electrode inserted into a separator in the method for manufacturing the electrode assembly according to an embodiment of the present invention.
FIG. 5 is a perspective view for explaining an electrode stack formation process in the method for manufacturing the electrode assembly according to an embodiment of the present invention.
FIG. 6 is a perspective view for explaining a main cutting process in the method for manufacturing the electrode assembly according to an embodiment of the present invention.
FIG. 7 is an enlarged plan view of a separator cutting line portion illustrated in FIG. 6.
FIG. 8 is a perspective view for explaining an electrode scrap removing process in the method for manufacturing the electrode assembly according to an embodiment of the present invention.
FIG. 9 is a plan view illustrating the electrode assembly manufactured in the method for manufacturing the electrode assembly according to an embodiment of the present invention.
FIG. 10 is an enlarged view illustrating a portion E of a dotted box in FIG. 9.
FIG. 11 is a cross-sectional view taken along the line A-A' of FIG. 10.
FIG. 12 is a cross-sectional view taken along the line B-B' of FIG. 10.

### MODE FOR CARRYING OUT THE INVENTION

Hereinafter, preferred embodiments of the present invention will be described in detail with reference to the accompanying drawings so that those of ordinary skill in the art may easily carry out the present invention. However, the present invention may be implemented in several different forms and is not limited or restricted by the following examples.

In order to clearly explain the present invention, detailed descriptions of portions that are irrelevant to the description or related known technologies that may unnecessarily obscure the gist of the present invention have been omitted, and in the present specification, reference symbols are added to components in each drawing. In this case, the same or similar reference numerals are assigned to the same or similar elements throughout the specification.

Also, terms or words used in this specification and claims should not be restrictively interpreted as ordinary meanings or dictionary-based meanings, but should be interpreted as meanings and concepts conforming to the scope of the present invention on the basis of the principle that an inventor may properly define the concept of a term to describe and explain his or her invention in the best ways.

### Method for manufacturing electrode assembly

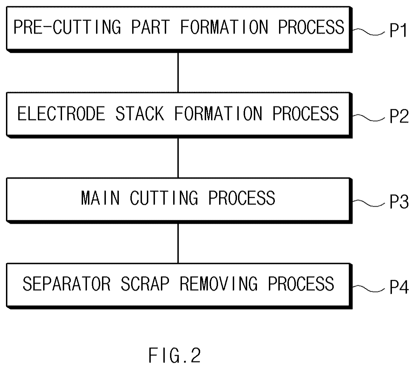

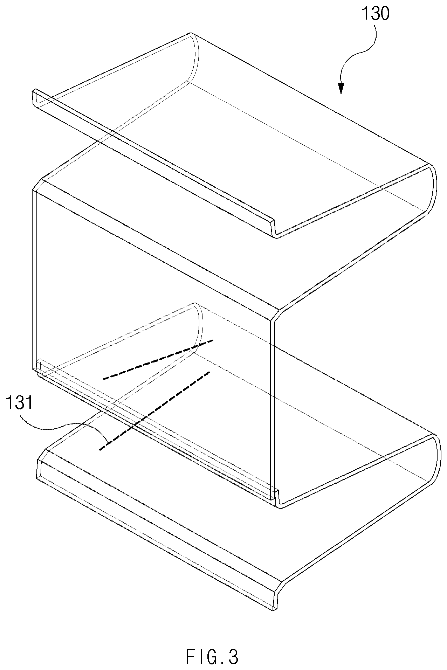

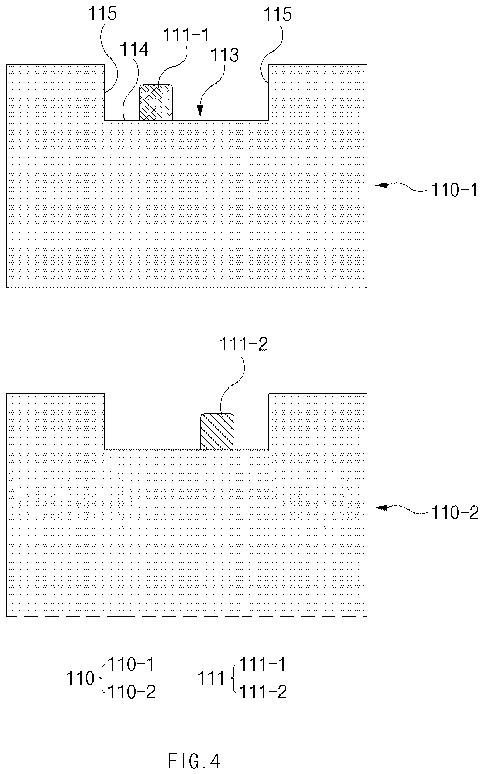

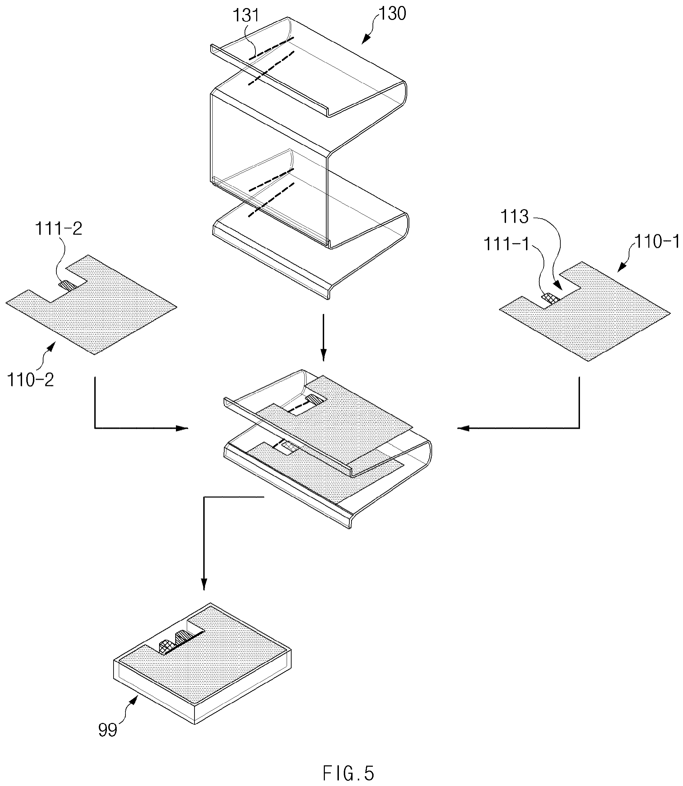

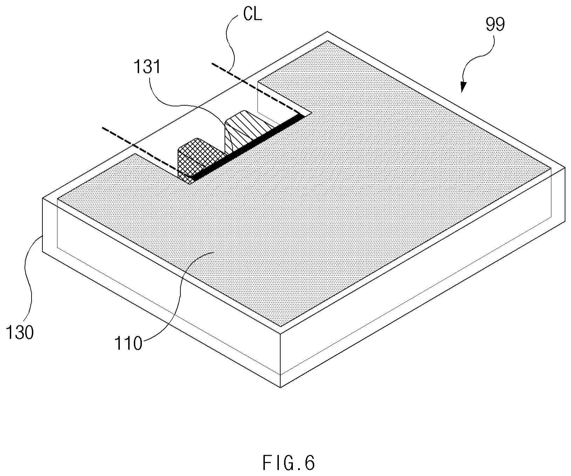

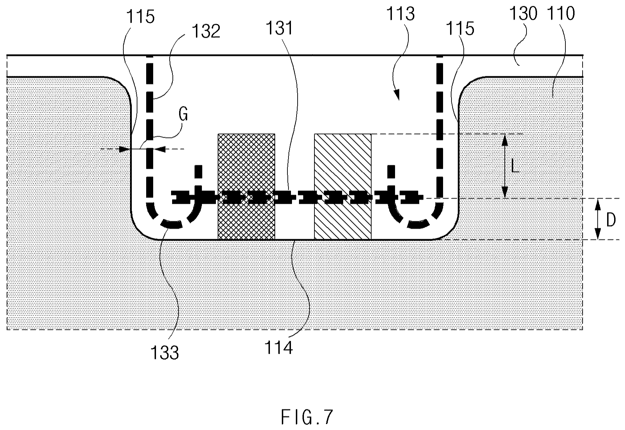

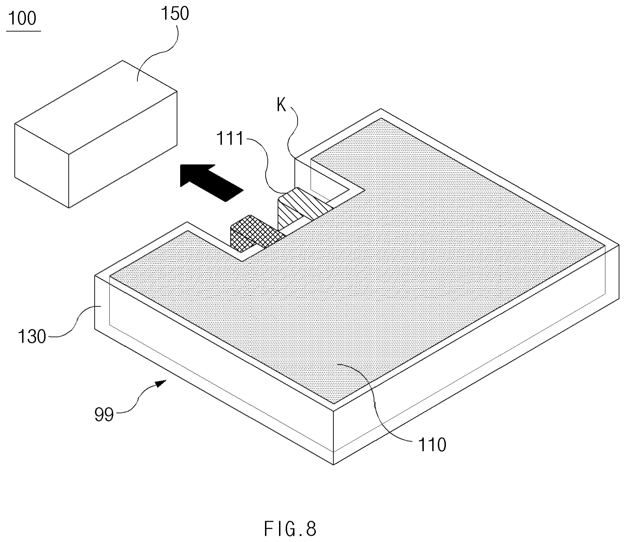

FIG. 1 is a conceptual perspective view illustrating a method for manufacturing an electrode assembly in a Z-folding manner according to the related art. FIG. 2 is a flowchart schematically illustrating a method for manufacturing an electrode assembly according to an embodiment of the present invention. FIG. 3 is a perspective view for explaining a pre-cutting part formation process in the method for manufacturing the electrode assembly according to an embodiment of the present invention. FIG. 4 is a plan view illustrating an electrode inserted into a separator in the method for manufacturing the electrode assembly according to an embodiment of the present invention. FIG. 5 is a perspective view for explaining an electrode stack formation process in the method for manufacturing the electrode assembly according to an embodiment of the present invention. FIG. 6 is a perspective view for explaining a main cutting process in the method for manufacturing the electrode assembly according to an embodiment of the present invention. FIG. 7 is an enlarged plan view of a separator cutting line portion illustrated in FIG. 6. FIG. 8 is a perspective view for explaining an electrode scrap removing process in the method for manufacturing the electrode assembly according to an embodiment of the present invention.

Referring to FIG. 2, a method for manufacturing an electrode assembly 100 according to an embodiment of the present invention may be a method for manufacturing the electrode assembly formed by stacking an electrode 110, which includes an electrode tab connection part 113, and a separator 130. Here, the electrode tab connection part 113 may have a shape that is recessed inward. For this, the method for manufacturing the electrode assembly 100 according to an embodiment of the present invention includes a pre-cutting part formation process P1, an electrode stack formation process P2, a main cutting process P3, and a separator scrap removing process P4.

Referring to FIG. 3, the pre-cutting part formation process P1 may be a process of preparing a separator 130 to form a pre-cutting part 131 in which a portion of the separator 130 is cut in advance for each unit length of the separator 130. As illustrated in FIG. 3, the pre-cutting part formation process P1 may be a process of preparing the rectangular separator 130 to form the pre-cutting part 131 in which a portion of the separator 130 is cut in advance. The pre-cutting part formation process P1 may be performed by forming the pre-cutting parts 131 at regular intervals while the long separator 130 is unfolded to be flat and may also be performed by bending or folding the separator 130 into a required shape. In addition, it may be performed by extruding the separator 130 using a roller, and various manners may be possible.

The pre-cutting part formation process P1 may be performed by a laser cutting method or a mold cutting method. In addition, the pre-cutting part 131 may be formed for each unit length of the separator, and the unit length may be the same as an interval at which the separator 130 is folded when the separator 130 is folded later to manufacture an electrode stack 99.

Referring to FIGS. 4 and 5, the electrode stack formation process P2 may be a process of forming the electrode stack 99 by zigzag-folding the separator 130 that has undergone the pre-cutting part formation process P1 and interposing an electrode 110 having an electrode tab connection part 113 in which an electrode tab is connected between the zigzag-folded separators 130.

FIG. 4 illustrates the electrode 110 interposed between the separators 130. The electrode 110 may include an positive electrode 110-2 and a negative electrode 110-1. The electrode 110 may have an inwardly recessed shape and may be provided with the electrode tab connection part 113 to which the electrode tab is connected, and in particular, may be provided with the electrode tab connection part 113 recessed in a square shape. The electrode tab connection part 113 may include a base side 114 and a lateral side 115.

The electrode 110 may be provided with the electrode tab disposed on the electrode tab connection part 113. In the electrode tab connection part 113, the base side 114 may be a side from which the electrode tab 111 protrudes. In addition, the lateral side 115 may be a side extending from the base side 114. The lateral side 115 and the base side 114 may meet each other at a predetermined angle. In this embodiment, the base side 114 and the lateral side 115 may be in a vertical relationship. The positive electrode 110-2 may be provided with a positive electrode tab 111-2, and the negative electrode 110-1 may be provided with a negative electrode tab 111-1.

Referring to FIG. 5, in the electrode stack formation process P2,the long rectangular separator 130, on which the pre-cutting part 131 has already been formed, may be zigzag-folded, and the positive electrode 110-2 and negative electrode 110-1 illustrated in FIG. 4 may be interposed between the zigzag-folded separators 130 to manufacture the electrode stack 99. Here, the process of zigzag-folding the separator 130 may be a process of zigzag-folding the separator 130 to be folded for each unit length described above. This may be to ensure that each pre-cutting part 131 matches each electrode 110.

Particularly, the electrode stack formation process P2 may be a process of folding the separator 130 once, placing the positive electrode 110-2 on the folded separator 130 to fold the separator 130 again on the placed positive electrode 110-2, and placing the negative electrode 110-1 on the folded separator 130. In addition, these processes may be repeated to manufacture the electrode stack 99. The positive electrode tab 111-2 and the negative electrode tab 111-1 are attached to the positive electrode 110-2 and the negative electrode 110-1, respectively, and when folding is performed with the separator 130, the positive electrode tab 111-2 and the negative electrode tab 111-1 are stacked while being covered first by the separator 130. When the zigzag-folding is completed in this manner, a finished electrode stack 99 as illustrated at the lowermost side in FIG. 5 may be provided.

In the electrode stack 99 manufactured as described above, the pre-cutting part 131 may be in the form of a line, which is spaced a predetermined distance D from the base side 114 (see FIG. 7). Here, the predetermined distance D may be less than a protrusion length L of the electrode tab 111 protruding from the base side 114. For this, in the pre-cutting part formation process P1 previously performed, in the state of the electrode stack 99, the separator 130 may be previously cut so that the pre-cutting part 131 has the form of the line that is spaced the predetermined distance D from the base side 114.

In more detail, for example, the negative electrode 110-1 may be larger than the positive electrode 110-2, and the pre-cutting part 131 may be in the form of the line spaced the predetermined distance D from the base side 114 of the electrode tab connection part 113 formed on the negative electrode 110-1.

Referring to FIG. 6, the main cutting process P3 may be a process of cutting the separator 130 along a cutting line CL connected to the pre-cutting part 131 so that the separator 130 disposed at a position corresponding to the electrode tab connection part 113 in the electrode stack 99 is cut off.

In addition, referring to FIG. 8, the separator scrap removing process P4 may be a process of removing a separator scrap 150 cut in the main cutting process P3 after the main cutting process P3. After completing the separator scrap removing process P4, an electrode assembly 100 may be manufactured.

When the electrode assembly 100 is manufactured using the method for manufacturing the electrode assembly 100 according to an embodiment of the present invention as described above, limitations of the conventional stacking technologies may be improved to secure a degree of freedom in cell design (such as a degree of freedom in tab position design) .

Particularly, the conventional cell design do not have a problem when the electrode tab 111 is disposed away from the separator 130. However, since the electrode tab 111 is provided in the electrode tab connection part 113 having the shape that is recessed into the electrode 110, it is difficult to cut the separator 130 so that the electrode tab 111 is exposed when the electrode tab 111 is covered by the separator 130 in the state of the electrode stack 99. The electrode tab may be damaged during the cutting process, or very complex and difficult work may be required to cut the electrode tab without damaging the electrode tab. This became a constraint on the design of the position of the electrode tab 111.

That is, in the conventional technologies, if an attempt is made to cut the separator 130 corresponding to the electrode tab connection part 113 of the electrode 110 while leaving the electrode tab 111 as it is, there is a high risk that the cutting line and the electrode tab overlap each other to damage or cut the electrode tab 111, and thus, it is difficult to cut the separator 130 as it is.

Alternatively, to solve this problem, it is possible to consider a case in which a portion of the separator 130 corresponding to the shape of the electrode tab connection part 113 is completely cut in advance to be folded. However, in the completely cut portion, tension of the separator 130 may disappear, and thus, a folding defect may occur due to surrounding air current or static electricity during the stacking. Particularly, a defect in which a portion of the separator 130 corresponding to a corner K of the electrode 110 from which the electrode tab connection 113 starts is easily folded may occur (see FIG. 8). This is problematic because of becoming a factor that hinders mass productivity and product safety. Thus, it may be seen that the method for manufacturing the electrode assembly 100 according to an embodiment of the present invention solves the folding problem of the separator 130.

Referring to FIG. 7, in the method for manufacturing the electrode assembly 100 according to an embodiment of the present invention, the main cutting process P3 may include a first cutting process and a second cutting process.

The first cutting process may be a process of cutting the separator 130 so that the cutting line is formed parallel to the lateral side 115 at a predetermined distance G from the lateral side 115. When naming the cutting line for convenience, the pre-cutting part 131 formed by the pre-cutting part formation process may be called a first cutting line 131. When the pre-cutting part 131 is regarded as the first cutting line 131, the cutting line formed in the first cutting process may be referred to as a second cutting line 132 illustrated in FIG. 7.

The second cutting process may be a process of cutting the separator 130 so that the cutting line connecting the cutting line 132 formed by the first cutting process to the cutting line 131 formed by the pre-cutting part formation process P1 is formed. That is, based on FIG. 7, the second cutting process may be a process of cutting the separator 130 so that a third cutting line 133 connecting the first cutting line 131, which is the pre-cutting part 131, to the second cutting line 132 is formed. The first cutting process and the second cutting process may be performed sequentially, or the first cutting process and the second cutting process may be performed simultaneously. The separator 130 may be cut so that the separator scrap 150 is completely separated from the electrode stack 99.

In the pre-cutting part formation process P1, if the cutting of the separator 130 is performed in a manner in which the separators are cut individually one by one, the cutting in the main cutting process P3 (i.e., the first cutting process and the second cutting process) may be performed in a manner in which the stack of the separator 130, in which a plurality of layers are stacked, is cut at once in the state of the electrode stack 99. That is, in the state in which the separator stack, in which a plurality of separators 130 are stacked in the stacking direction, is held, the separator stack may be cut at once. A specific method of cutting the separator 130 as described above may be a laser cutting method or a mold cutting method.

Referring to FIG. 7, in the main cutting process P3 according to an embodiment of the present invention, the separator 130 may be cut so that the cutting line formed by the second cutting process, i.e., the third cutting line 133, has a shape that is more recessed toward the base side 114 than the cutting line by the pre-cutting part (i.e., the first cutting line 131).

Based on FIG. 7, the second cutting process of forming the third cutting line 133 may be a process of cutting the separator while descending further toward the base side 114 than the pre-cutting part 131 at an end at which the second cutting line 132 is ended and then ascending again to meet the pre-cutting parts 131. If the third cutting line 133 is cut to have a shape that is more recessed than the pre-cutting part 131 toward the base side 114, the pre-cutting part 131 and the third cutting line 133 may have a stepped shape.

As illustrated in FIG. 7, the pre-cutting part 131 may not be completely aligned due to a tolerance during the formation process of the pre-cutting part 131. That is, the plurality of pre-cutting parts 131 formed at respective positions of the separator 130 may not be aligned in a single line after the folding due to the tolerance. It may appear to be aligned with a plurality of slightly misaligned lines, as illustrated in FIG. 7. In this case, in order for the third cutting line 133 to meet all the lines of the pre-cutting part 131, it may be necessary to be cut while ascending to pass through all the lines of the pre-cutting part 131. In this case, the third cutting line 133 has a shape that is recessed toward the base side 114.

If not in that manner, and the third cutting line 133 is provided to meet the pre-cutting part 131 in a horizontal direction (i.e., in the direction in which the pre-cutting part 131 line extends), there may be a layer of the separator 130, on which the third cutting line 133 does not meet the pre-cutting part 131. Thus, the manner in which the cutting is performed so that the third cutting line 133 meets the pre-cutting part 131 while descending and then ascending to have a shape that is more recessed than the pre-cutting part 131 toward the base side 114 may be a manner that is necessary for manufacturing the electrode assembly 100 having superior quality more effectively without the cutting defects. As a result, problems such as non-cutting of the separator 130 due to the process tolerance may be prevented.

Alternatively, when forming the second cutting line 132 in the first cutting process, there may be a method of performing the cutting so that the second cutting line 132 passes through all of the lines of the pre-cutting part 131 at once and does not performing a separate second cutting process. However, in this case, the cutting has to be performed so that the second cutting line 132 is relatively further away from the lateral side 115. In this case, the second cutting line 132 is formed further away from the side. That is, a length of the separator 130 protruding from the lateral side 115 becomes longer. In this case, unnecessary space waste may occur in the electrode assembly 100 that is a final product.

Thus, in the present invention, in the first cutting process, the cutting may be performed by dropping the second cutting line 132 to an optimal distance (or minimum distance) from the lateral side 115, and in the second cutting process, the third cutting line 133 may be descend and then ascend to have the shape that is more recessed than the pre-cutting part 131 toward the base side 114, thereby preventing the space waste and achieving optimal space efficiency.

In order to perform smooth and fast work, in the second cutting process, the separator 130 may be cut so that the cutting line 133 formed by the second cutting process has a curved shape.

In this embodiment, a case in which the electrode tab connection part 113 has the shape that is recessed inward has been described, but this does not mean that the shape of the electrode tab connection part 113 is limited thereto, and other shapes may also be included in the scope of the present invention. That is, if the degree of freedom in cell design (degree of freedom in tab position design, etc.) is secured, and production efficiency is achieved by performing the pre-cutting part formation process P1, the present invention may be applied even when the shape of the electrode tab connection part 113 is not the inwardly recessed shape.

### Electrode assembly

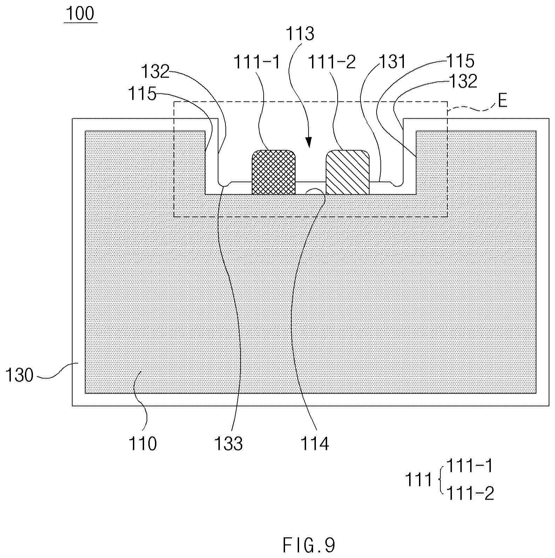

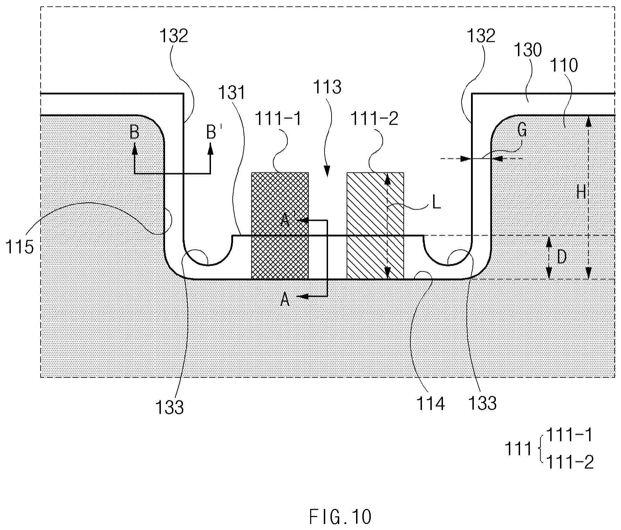

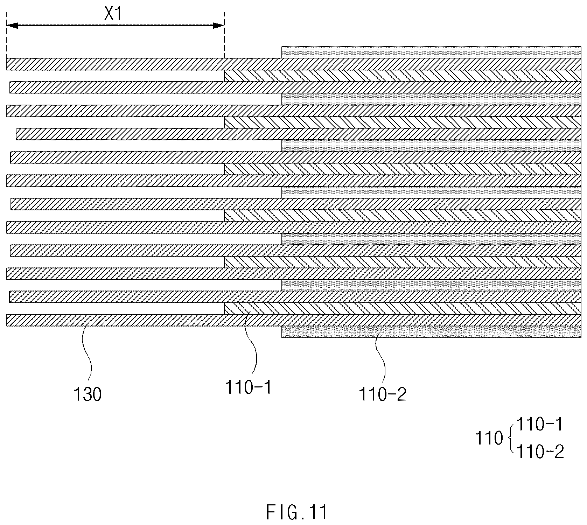

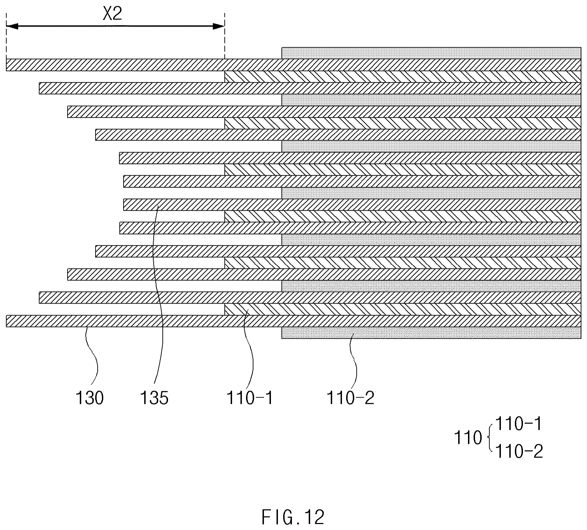

FIG. 9 is a plan view illustrating the electrode assembly manufactured in the method for manufacturing the electrode assembly according to an embodiment of the present invention. FIG. 10 is an enlarged view illustrating a portion E of a dotted box in FIG. 9. FIG. 11 is a cross-sectional view taken along the line A-A' of FIG. 10. FIG. 12 is a cross-sectional view taken along the line B-B' of FIG. 10.

Another embodiment of the present invention, an electrode assembly, is different from the foregoing embodiment in that it relates to an electrode assembly manufactured by the method for manufacturing the electrode assembly described in the foregoing embodiment.

Details duplicated with those described in the method for manufacturing the electrode assembly will be omitted as much as possible, and differences will be described below. That is, it is obvious that if contents that are not described in this embodiment are required, it may be supplemented through the contents described in the method for manufacturing the electrode assembly according to the forgoing embodiment.

Referring to FIGS. 9 and 10, an electrode assembly 100 according to another embodiment of the present invention may include a separator 130 and an electrode 110 and may be in the form of a stack in which the electrode 110 and the separator 130 are stacked. Here, the separator 130 has a zigzag-folded and stacked form, and the electrode 110 may be configured to be interposed between the separators 130. In addition, the electrode 110 may have an electrode tab connection part 113 to which an electrode tab is connected. In addition, the electrode 110 may be a positive electrode 110-2 or a negative electrode 110-1. The electrode 110 may be provided with an electrode tab 111. Here, the electrode tab 111 includes a positive electrode tab 111-2 and a negative electrode tab 111-1. The positive electrode 110-2 may be provided with the positive electrode tab 111-2. The negative electrode 110-1 may be provided with the negative electrode tab 111-1. In addition, the electrode tab 111 may be provided on the electrode tab connection part 113. That is, the electrode 110 may be provided with the electrode tab 111 disposed on the electrode tab connection part 113. In addition, the separator 130 may be cut in a shape corresponding to the electrode tab connection part 113 at a position corresponding to the electrode tab connection part 113. The electrode assembly 100 according to an embodiment of the present invention may have the above-described configuration to improve the limitations of conventional stacking technologies and secure a degree of freedom in cell design (such as a degree of freedom in tab position design).

In the electrode assembly 100 according to an embodiment of the present invention, the electrode 110 may be provided with an electrode tab connection part 113. Here, the electrode 110 may be, for example, the negative electrode 110-1.

In addition, the electrode tab connection part 113 may have a recessed shape. Particularly, the electrode tab connection part 113 may include a base side 114 from which the electrode tab 111 protrudes and a lateral side 115 extending from the base side 114. In addition, a protrusion length L of the electrode tab 111 protruding from the base side 114 may be less than a recessed depth H of the electrode tab connection part 113, which is measured based on the base side 114 (see FIG. 10).

In addition, similarly, referring to FIGS. 9 and 10, the separator 130 having a zigzag-stacked shape may include a first cutting line 131, a second cutting line 132, and a third cutting line 133.

The first cutting line 131 may have a line shape spaced a predetermined distance D from the base side 114. In the method for manufacturing the electrode assembly 100 according to an embodiment of the present invention, a pre-cutting part 131 may be formed in the separator 130 by performing a pre-cutting part formation process P1, and the first cutting line 131 may be a cutting line formed by this pre-cutting part formation process P1.

Referring to FIG. 10, the predetermined distance D at which the first cutting line 131 is spaced from the base side 114 may be less than a protrusion length L at which the electrode tab 111 protrudes from the base side 114. This may be a result of manufacturing the electrode assembly 100 in such a manner in which the pre-cutting part 131 is formed in a line shape spaced the predetermined distance D from the base side 114 in the pre-cutting part formation process P1, but the predetermined distance is less than the protrusion length of the electrode tab 111 protruding from the base side 114.

The second cutting line 132 may be a cutting line in the form of a line parallel to a direction in which a lateral side 115 extends in the state of being spaced a predetermined distance G from the lateral side 115. The second cutting line 132 may be a cutting line formed by a main cutting process P3 performed in the method for manufacturing the electrode assembly 100 according to an embodiment of the present invention, which is described above. More particularly, the second cutting line 132 may be a cutting line formed by the first cutting process during the main cutting process P3.

The third cutting line 133 may be a cutting line connecting the second cutting line 132 to the first cutting line 131. The third cutting line 133 may be formed to have a shape that is more recessed than the first cutting line 131 toward the base side 114. Due to this shape, the first cutting line 131 and the third cutting line 133 may have a stepped shape. As described above, the electrode assembly 100 having this shape may prevent problems such as non-cutting of the separator 130 due to a process tolerance, and also, since the second cutting line 132 is formed at an optimal distance (or minimum distance) from the side 115, there may be no waste of a space, and optimal space efficiency may be achieved.

In order to perform smooth and fast work, in the second cutting process of the main cutting process P3, the separator 130 may be cut so that the cutting line formed by the second cutting process has a curved shape, and as a result, the third cutting line 133 may be formed to have a curved shape or a shape of a portion of a circular shape.

Referring to FIG. 11, in the electrode assembly 100 according to an embodiment of the present invention, based on a cross-sectional view in which a stack of separators 130 is cut along a stacking direction, the separators 130 may have a relatively more uniform electrode 110-separator 130 overhang value X1 along the stacking direction at the position of the first cutting line 131. In addition, referring to FIG. 12, the separators 130 may have a relatively more non-uniform electrode 110-separator 130 overhang value X2 along the stacking direction at the position of the second cutting line 132. Here, the electrode 110-separator 130 overhang value (X) means a distance value from an end of the electrode 110 to an end of the separator 130.

Particularly, FIG. 11 is a cross-sectional view taken along line A-A' of FIG. 10 and illustrates a cross-section of the separators 130 in the stacking direction at the first cutting line 131. FIG. 12 is a cross-sectional view along line B-B' of FIG. 10 and illustrates a cross-section of the separators 130 in the stacking direction at the second cutting line 132.

In a change in length of each of the separators 130 in FIG. 11, it may be seen that the separators 130 have a relatively uniform length. That is, referring to FIG. 11, it may be seen that the electrode 110-separator 130 overhang value X1 at the position of the first cutting line 131 does not change significantly in the plurality of separators 130 disposed in the stacking direction and is relatively uniform. Here, the electrode 110-separator 130 overhang value may specifically be a negative electrode-separator overhang value. That is, the electrode 110-separator 130 overhang value may mean a distance value between the end of the negative electrode 110-1 and the end of the separator 130.

When considering the electrode 110-separator 130 overhang value at the position of the first cutting line 131, the end of the separator 130 may be formed by the first cutting line 131 in the pre-cutting part formation process P1. In the pre-cutting part formation process P1, the separator 130 is cut one by one at a set position, and thus, the position of the end of the separator 130 may be determined consistently. Thus, the end of the separator 130 may be formed at a substantially uniform position except for a fine tolerance. Thus, the uniform electrode 110-separator 130 overhang value X1 may be provided at the position of the first cutting line 131.

On the other hand, referring to FIG. 12, it may be seen that the electrode 110-separator 130 overhang value X2 at the position of the second cutting line 132 varies and is relatively more non-uniform in plurality of separators 130 placed in the stacking direction. Here, the electrode 110-separator 130 overhang value may specifically be a negative electrode-separator overhang value. That is, the electrode 110-separator 130 overhang value may mean a distance value between the end of the negative electrode 110-1 and the end of the separator 130.

When considering the electrode 110-separator 130 overhang value at the position of the second cutting line 132, the end of the separator 130 may be formed by the second cutting line 132 in the main cutting process P3. In the main cutting process P3, a stack of the separators 130, in which a plurality of layers are stacked in the state of the electrode stack 99 may be held to be cut at once. If the stack of the separators 130 is cut at once while being held in this manner, a cutting length may vary between the separators 130 stacked in the thickness direction due to friction between the cutting tool and the separators 130, differences in the contact area between the separators, and slipping phenomena between the separators 130. Thus, the end of the separator 130 may be formed at substantially non-uniform position. Thus, a relatively more non-uniform electrode 110-separator 130 overhang value X1 may be provided at the position of the second cutting line 132.

Particularly, referring to FIG. 12, based on a cross-sectional view of the separator stack cut along the stacking direction, the separators 130 may have an electrode 110-separator 130 overhang value that gradually decreases and then gradually increases along the stacking direction, at the position of the second cutting line 132. This may be a shape formed by cutting the stack of the separator, in which the plurality of layers are stacked in the state of the electrode stack 99, by holding the stack at once and cutting the stack in a vertical direction. In addition, when cut vertically by a vertically symmetrical cutting mechanism, the stacked separators 130 may be vertically symmetrical based on the separator 135 stacked at the middle height in terms of the electrode 110-separator 130 overhang value at the position of the second cutting line 132.

As described above, in the electrode assembly 100 implemented by the embodiment of the present invention, the limitations of conventional stacking techniques may be improved to secure the degree of freedom in cell design (the degree of freedom in tab position design, etc.), solve the folding problem of the separator, and prevent a problem of the non-cutting of the separator due to the process tolerance.

### Secondary Battery

A secondary battery according to another embodiment of the present invention may be provided. The secondary battery according to an embodiment of the present invention may include an electrode assembly 100 described above and a battery case (not shown) capable of accommodating the electrode assembly 100.

The secondary battery may improve the limitations of the conventional stacking technologies to secure a degree of freedom in cell design (a degree of freedom in tab position design, etc.), solve a problem of folding of a separator, and prevent a problem of non-cutting of the separator due to a process tolerance.

While the embodiments of the present invention have been described with reference to the specific embodiments, it will be apparent to those skilled in the art that various changes and modifications may be made without departing from the spirit and scope of the invention as defined in the following claims.

### [Description of the Symbols]

99: Electrode stack
90, 100: Electrode assembly
110: Electrode
11, 110-1: Negative electrode
12, 110-2: Positive electrode
111: Electrode tab
111-1: Negative electrode tab
111-2: Positive electrode tab
113: Electrode tab connection part
114: Base side
115: lateral side
30, 130: Separator
131: Pre-cutting part, First cutting line
132: Second cutting line
133: Third cutting line
135: Separator stacked in middle height
150: Separator scrap
P1: Pre-cutting part formation process
P2: Electrode stack formation process
P3: Main cutting process
P4: Separator scrap removing process

## Claims

1. An electrode assembly comprising:
a separator folded to be stacked; and
an electrode interposed between the folded separators and provided with an electrode tab connection part to which an electrode tab is connected,
wherein the electrode is provided with the electrode tab disposed at the electrode tab connection part, and
the separator is cut in a shape corresponding to the electrode tab connection part at a position corresponding to the electrode tab connection part.

2. The electrode assembly of claim 1, wherein the electrode tab connection part has a recessed shape and comprises a base side from which the electrode tab protrudes and a lateral side extending from the base side, and
the separator comprises:
a first cutting line having a line shape that is spaced a predetermined distance (D) from the base side;
a second cutting line having a line shape parallel to a direction, in which the lateral side extends, in a state of being spaced a predetermined distance (G) from the lateral side; and
a third cutting line configured to connect the second cutting line to the first cutting line.

3. The electrode assembly of claim 2, wherein a protrusion length (L) by which the electrode tab protrudes from the base side is less than a recessed depth (H) of the electrode tab connection part, which is measured based on the base side.

4. The electrode assembly of claim 2, wherein the predetermined distance (D) that is a distance by which the first cutting line is spaced apart from the base side is less than the protrusion length (L) by which the electrode tab protrudes from the base side.

5. The electrode assembly of claim 2, wherein the third cutting line has a curved shape.

6. The electrode assembly of claim 2, wherein the third cutting line has a shape corresponding to a portion of a circle.

7. The electrode assembly of claim 2, wherein the third cutting line has a shape that is further recessed than the first cutting line toward the base side.

8. The electrode assembly of claim 2, wherein, based on a cross-sectional view of the separator stack, which is taken along a stacking direction,
at a position of the first cutting line, the separators have a relatively more uniform electrode-separator overhang value (X1) along the stacking direction, and
at a position of the second cutting line, the separators have a relatively more non-uniform electrode-separator overhang value (X2) along the stacking direction,
wherein each of the electrode-separator overhang values (X) means a distance value from an end of the electrode to an end of the separator.

9. The electrode assembly of claim 8, wherein, based on a cross-sectional view of the separator stack, which is taken along a stacking direction, at the position of the second cutting line, the separators have an electrode-separator overhang value that gradually decreases and then gradually increases along the stacking direction.

10. The electrode assembly of claim 9, wherein, based on a cross-sectional view of the separator stack, which is taken along a stacking direction, at the position of the second cutting line, the stacked separators are vertically symmetrical based on the separator stacked at a middle height in terms of the electrode-separator overhang value.

11. The electrode assembly of claim 1, wherein the separator is zigzag-folded to be stacked.

12. A secondary battery comprising:
the electrode assembly of claim 1; and
a battery case configured to accommodate the electrode assembly.
